# EUROPÄISCHE PATENTSCHRIFT

(11) **EP 0 733 865 B1**
(45) Veröffentlichungstag und Bekanntmachung des Hinweises auf die Patenterteilung: **24.07.2002**
(21) Anmeldenummer: 96104198.5
(22) Anmeldetag: 16.03.1996
(51) Int. Cl.: F24D 3/16

(54) **Konstruktion einer Heiz- und/oder Kühldecke**
Construction of a ceiling for heating or cooling
Construction d'un plafond pour chauffage ou pour réfrigération

(30) Priorität: 21.03.1995 CH 79395
(43) Veröffentlichungstag der Anmeldung: 25.09.1996
(73) Patentinhaber: GIACOMINI S.p.A., 28017 S. Maurizio d'Opaglio (NO) (IT)
(72) Erfinder: Giacomini, Marco, 28016 Orta San Giulio, Prov. di Novara (IT)
(74) Vertreter: Gaggini, Carlo, Ing.

(56) Entgegenhaltungen:
- EP-A- 0 548 480
- US-A- 2 660 409

## Beschreibung

Die vorliegende Erfindung betrifft eine Konstruktion einer Heiz- und/oder Kühldecke mit einer Tragstruktur, die ein flexibles Rohr und die Deckenplatten trägt, gemäss dem Oberbegriff des Patentanspruchs 1.

Decken dieser Art werden heute immer häufiger zur Klimatisierung von Wohn- und Büroräumen angewendet, insbesondere in Kombination mit Bodenbelägen, in die Heiz- und Kühlschlangen eingebaut sind.

Die Konstruktion solcher Decken muss verschiedenen hauptsächlichen Anforderungen genügen, nämlich:
a) Die Montage und die Demontage muss einfach sein, und muss insbesondere mit möglichst wenig Werkzeugen erfolgen können, und die Anschlüsse müssen einfach und bequem zu bewerkstelligen sein;
b) Gutes Aussehen der Decke, die vorzugsweise keine sichtbaren Befestigungselemente (wie Schraubenköpfe, Muttern oder ähnliches) aufweist. Teil dieses Wertungskriteriums ist auch die Möglichkeit, die Deckenplatten (die die Form von quadratischen Platten, auch Karos genannt, oder von rechteckigen Platten, auch Riemen genannt) mit einem Spalt minimaler Breite zwischen benachbarten Platten montieren zu können;
c) Die Kosten der Heiz- und/oder Kühldecke, die sowohl von der konstruktiven Gestaltung der Tragstruktur als auch vom Arbeitsaufwand für die Montage der Decke bis zur Inbetriebnahme abhängen;
d) Die Vielseitigkeit der Konstruktion, die die Möglichkeiten verbessert, ihre Tragstruktur an die Deckenplatten der verschiedenen Arten anzupassen, z.B. für die Verwendung von Karos und von Riemen.

Die Praxisanwendung heruntergehängter Decken einerseits, deren einziger Zweck ist, die ursprüngliche Decke auf ein Höhenniveau abzusenken, das den jeweiligen Wünschen nach Wohnlichkeit eines Raums besser entspricht, und die Praxisanwendung von Heiz- bzw. Kühldecken andererseits, auch von heruntergehängten, wie auch die entsprechende Patentliteratur, kennen schon heute eine ganze Reihe von Vorschlägen, die einzelne der eingangs erwähnten Probleme mehr oder weniger gut lösen. Jedenfalls handelt es sich dabei um punktuelle, aber keine generellen Lösungen, d.h. Lösungen, die nur das eine oder das andere der gestellten Probleme angehen und lösen, andere jedoch ungelöst lassen, wenn auch heute verschiedene interessante Teillösungen verfügbar sind, jedoch noch keinerlei wirklich befriedigende generelle Lösung.

Die EP-A-548.480 zeigt die Konstruktion einer Heiz- und/oder Kühldecke mit einer Tragstruktur für ein flexibles Heiz- bzw. Kühlrohr (14) in Form einer aus einer Vielzahl von Windungen gebildeten Schlange, sowie für die Deckenplatten in Form quadratischer Karos oder Riemen (3) mit einem mindestens auf einer der parallelen Seiten aufgebogenen Rand (29, 29'), wobei die Tragstruktur zwei Systeme von parallelen Profilelementen (7, 8) enthält, und die Profilelemente (7,8) des einen Systems im rechten Winkel zu jenen des anderenSystems von Profilelementen (7,8) angeordnet sind, so dass ein Netz von Profilelementen (7, 8) gebildet wird, wobei die Profilelemente (7) des einen der Systeme von Profilelementen(7, 8) zur Befestigung der Deckenplatten (3) dienen, welche an den Profilelementen (7) mit Hilfe eines Andrucksystems, daß auf lokaler elastischer Verformung (Klemm-Clips) basiert, befestigt sind.

Dieses System, dessen Konstruktion gewiss einfach ist, erfordert jedoch, dass das Rohr und die Deckenplatten, insbesondere die schmalen und langgezogenen Riemen, an wenigen, weit voneinander entfernten Punkten befestigt werden müssen, so dass die Gefahr besteht, dass die Riemen tendieren, zwischen zwei aufeinanderfolgenden Befestigungsprofilen durchzuhängen, insbesondere, falls sich das wassergefüllte Heiz- oder Kühlrohr auf ihnen abstützt. Daraus entsteht ein für das Aussehen schwerwiegender Nachteil, denn eine unebene, d.h. eine gewellte Decke ist so unschön wie man sie sich nur vorstellen kann. Daher handelt es sich hier also um eine Decke, die sich zur Befestigung quadratischer Deckenplatten eignet, d.h. von Karos mit allseitig aufgebogenen Rändern, nicht jedoch zur Befestigung langgezogener Riemen.

Ueberdies erlaubt diese Lösung nicht, eine Decke mit sehr engen Fugen zwischen einem Karo und dem nächsten zu erreichen, weil die Fugen eine genügende Breite aufweisen müssen, damit das benachbarte Karo montiert bzw. demontiert werden kann. Dies beruht darauf, dass die Karos in einem Profilelement eingehängt werden, in dem profilierte Ausnehmungen mit festen Kanten vorgesehen sind, die sich nicht aufweiten können, wenn der Rand eines Karos eingehängt werden soll. Vielmehr müssen sich die Ränder der Karos selbst verformen, was bedeutet, dass zwischen dem Rand des einen Karos und jenem des benachbarten Karos für die Verformung der Ränder ein freier Raum belassen werden muss. Analoge Verhältnisse zeigen sich auch gemäss der Deutschen Patentanmeldung DE-A-4020970.

Ferner ist aus der Praxis eine Konstruktion einer herabgehängten Decke bekannt, deren Tragkonstruktion aus zwei Systemen paralleler Profilelemente besteht, wobei die Profilelemente des einen Systems im rechten Winkel zu den Profilelementen des anderen Systems angeordnet sind, so dass ein Netz von Profilelementen gebildet wird. In der bekannten Konstruktion dienen diese beiden Systeme von Profilelementen lediglich dazu, die Deckenplatten zu tragen, die an den Profilelementen an einem der Systeme mittels einer auf lokaler eslastischer Verformung beruhenden Anschlussmethode befestigt werden.

Bei der Ausarbeitung der vorliegenden Erfindung wurde bemerkt, dass diese bekannte Konstruktion einer herabgehängten Decke mit zwei untereinander orthogonal angeordneten Systemen von Profilelementen optimale Bedingungen bietet, um eine Heiz- und/oder Kühldecke zu schaffen, die mit geeigneten Aenderungen, auf denen die vorliegende Erfindung beruht, alle an eine solche Konstruktion gestellten, obengenannten Anforderungen erfüllen kann. Die vorliegende Erfindung stellt also eine Verbesserung einer bekannten Konstruktion einer herabgehängten Decke dar, die es ermöglicht, alle die besten Konstruktionseigenschaften ähnlicher Decken dank den Anpassungen an den speziellen Fall der Anwendung in einer Heiz- und/oder Kühldecke auszunützen, d.h. an eine Decke, die auch eine Heiz- bzw. Kühlschlange trägt.

Das Ziel der vorliegenden Erfindung ist daher, die oben aufgelisteten Anforderungen an eine Heiz- und/oder Kühldecke zu erfüllen, unter voller Ausnützung der Erfahrungen auch aus der Konstruktion herabgehängter Decken, die keine Heiz- und/oder Kühlrohre enthalten.

Dieses Ziel wird erreicht durch eine Konstruktion einer Heiz- und/oder Kühldecke mit den Eigenheiten gemäss dem charakterisierenden Teil des Patentanspruchs 1.

Dank der Tatsache, dass die Profilelemente (3, 6) des einen Systems von Profilelementen (3, 6) durchgehen und sich über weite Bereiche der Decke erstrecken, vorzugsweise über die ganze Breite der Decke zwischen zwei Wänden, und dass die Profilelemente (3, 6) des anderen Systems von Profilelementen aus einzelnen Stücken bestehen, die im rechten Winkel zwischen zwei parallelen Profilelementen (3, 6) des ersten Systems von Profilelementen eingefügt und daran befestigt werden, wird eine grosse Vielseitigkeit der Anwendung der Lösung sowie eine beachtliche Montagefreiheit erreicht. Unter anderem wird erreicht, dass die Ränder der langgezogenen Riemen nicht bloss an wenigen, weit auseinanderliegenden Punkten wie gemäss dem Stand der Technik, sondern über ihre ganze Länge geführt und befestigt werden können, so dass die Riemen absolut eben bleiben und keine "Wellen" mehr bilden können.

Zu bemerken ist sodann, dass die Art der Befestigung der beiden Systeme von Profilelementen am Gebäude-Deckenmauerwerk (z.B.Befestigung jedes Profil-Elementes mittels Stangen direkt, oder Befestigung der Profilelemente des einen Systems von Profilelementen mittels Stangen am Gebäude-Deckenmauerwerk und jener des zweiten Systems von Profilelementen an den Profilelementen des ersten Systems von Profilelementen, also indirekt am Gebäude-Deckenmauerwerk) im Rahmen der vorliegenden Erfindung keine ausschlaggebende Rolle spielt, auch wenn die vorzugsweise gewählten Lösungen vorsehen, dass lediglich die Profilelemente des einen Systems mittels einstellbaren Stangen am Gebäude-Deckenmauerwerk befestigt werden.

Die Unteransprüche 2 bis 9 betreffen Verbesserungen des zugrunde liegenden Erfindungsgedankens, die in der nachfolgenden Beschreibung verschiedener vorzugsweise gewählter Ausführungsformen im einzelnen erklärt werden.

Die Erfindung ist im folgenden unter Bezugnahme auf verschiedene, in den Figuren dargestellten Ausführungsformen näher beschrieben. Es zeigen die:
- Fig. 1 eine Konstruktion einer erfindungsgemässen Heiz- bzw. Kühldecke in perspektivischer Darstellung;
- Fig. 2 die Konstruktion gemäss Fig. 1 in einer Seitenansicht;
- Fig. 3 eine andere Ausführungsform der Deckenkonstruktion gemäss den Figuren 1 und 2, bei der das wasserführende Rohr an einem der Profilelemente mittels eines Zwischenelementes befestigt ist;
- Fig. 4 eine weitere Ausführungsform der erfindungsgemässen Deckenkonstruktion, deren Profilelementen des einen Systems in Einschnitten an den Profilelementen des anderen Systems befestigt sind;
- Fig. 5 eine vergrössert dargestellte Einzelheit der Ausbildung des Einschnittes zwischen den Profilelementen gemäss der in Fig. 4 gezeigten Lösung;
- Fig. 6 die gleiche Einzelheit der Konstruktion gemäss der Fig. 5 in perspektivischer Darstellung.

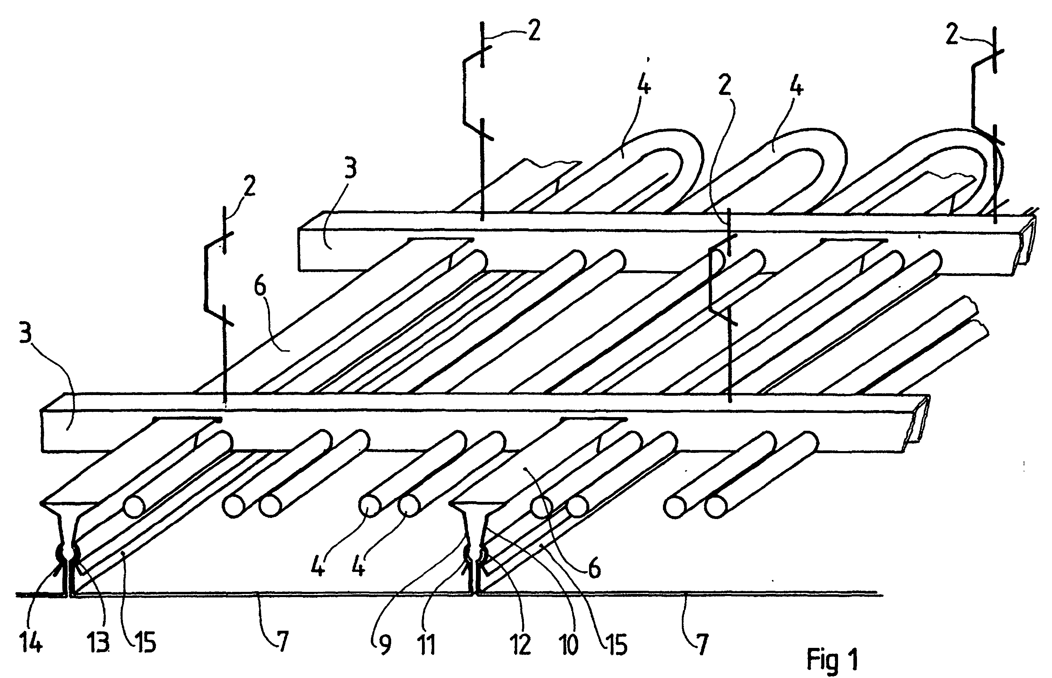

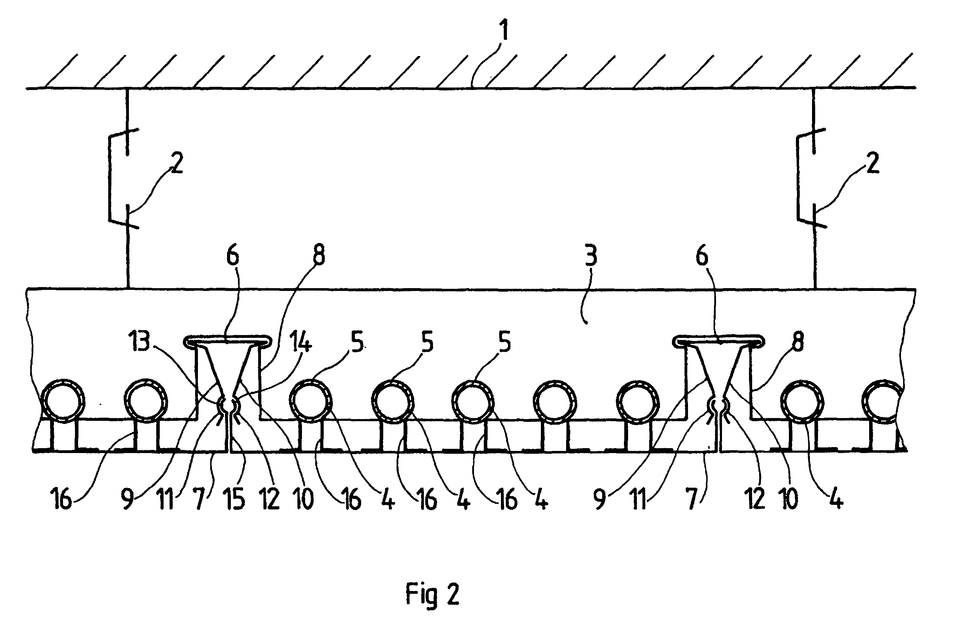

In der Fig. 1 ist eine perspektivische Ansicht einer ersten Ausführungsform einer erfindungsgemässen Heiz- bzw. Kühldecke gezeigt, wobei die Decke auch in der Fig. 2 in einer Seitenansicht dargestellt ist, mit dem Gebäude-Deckenmauerwerk 1 und den Befestigungselementen 2, mittels welchen die erfindungsgemässe Decke am Mauerwerk 1 befestigt ist. Diese Befestigungselemente können beliebiger Art sein, beispielsweise Gewindestangen oder, wie abgebildet, aus zwei Stücken bestehende Stangen deren freie Enden in einem Einstellbogen eingehängt sind. Dies ist aus der Anwendungspraxis gut bekannt und wird für zahlreiche Aufhängeprobleme laufend angewendet. Von Belang ist einzig, dass die Länge der Befestigungselemente 2 einstellbar ist, so dass die Ebenheit der fertigen Decke auf beste Art eingestellt werden kann.

An den Befestigungselementen 2 sind die Profilelemente 3 des einen Systems von Profilelementen aufgehängt. Wie aus den Figuren 1 und 2 ersichtlich ist, sind diese Profilelemente 3 untereinander parallel angeordnet, wobei sich der gegenseitige Abstand nach den Erfordernissen von Stabilität und Verformung der Decke richtet, welche Probleme nur indirekt mit der Art der für die Decke verwendeten Deckenplatten zusammenhängen. In der Tat dienen die Profilelemente 3 dieser Ausführungsform zur direkten Aufnahme des flexiblen Rohrs 4. Die Profilelemente 3 sind beispielsweise als nach unten gerichtetes U-Profil ausgebildet, wobei die beiden Aeste des U-Profils in regelmässig angeordneten Abständen runde, nach unten offene Oeffnungen aufweisen, die sich über einen Zentriwinkel von mehr als 180° (beispielsweise 220°) um das Rohr erstrecken. Das normalerweise aus Kunststoff bestehende flexible Rohr 4 wird von unten her in die Oeffnungen 5 gedrückt, wo die Oeffnung etwas weniger breit ist als der Durchmesser d des Rohrs 4, so dass das Rohr 4 als fortlaufende Schlange mit geraden Abschnitten und Bögen ausgelegt wird. Dies ist gemäss dem Stand der Technik (vgl. z.B. die Patentanmeldung EP-A-0548480, in der sowohl die Rohrschlange als auch deren Befestigung in den Profilelementen 3 gezeigt sind) bekannt, so es dass sich erübrigt, die Einzelheiten der Konstruktion hier näher zu erläutern.

In den Figuren 1 und 2 sind auch die Profilelemente 6 eines zweiten Systems von Profilelementen dargestellt, die erfindungsgemäss im rechten Winkel zu den Profilelementen 3 des anderen Systems angeordnet sind und sich über weite Bereiche der Decke erstrecken, vorzugsweise über die ganze Breite der Decke zwischen zwei Wänden. Die Kombination der Profilelemente 3 des einen Systems von Profilelementen mit den Profilelementen 6 des anderen Systems ergibt ein Netzwerk von Profilelementen, das zusammen mit den Befestigungselementen 2 die tragende Struktur der erfindungsgemässen Decke bildet.

Jedem der beiden Systeme von Profilelementen 3 und 6 sind verschiedene und genau definierte Funktionen zugeordnet, nämlich: Die Profilelemente 6 des einen dieser Systeme dienen dazu, die Deckenplatten 7 zu tragen, die überdies mittels eines auf lokaler Verformung (in der Art eines Klammer-Clips) beruhenden Andrücksystems (von denen eines im folgenden näher beschrieben wird) an den Profilelementen 6 befestigt sind, während die Profilelemente 3 des anderen Systems, wie bereits beschrieben, dazu dienen, das flexible Heiz- bzw. Kühlrohr 4 in einer beliebigen Weise zu tragen, wovon eine die oben beschriebene ist. Die Art der Befestigung der beiden Systeme der Profilelemente 3 und 6 am Gebäude-Deckenmauerwerk 1 - d.h. ob jedes der Profilelemente mit eigenen Befestigungselementen versehen ist, oder ob die Profilelemente des einen Systems unter Zwischenschaltung der Profilelemente des anderen Systems am Deckenmauerwerk 1 befestigt sind nicht den geringsten Einfluss im weiteren Rahmen der vorliegenden Erfindung. Im Beispiel gemäss den Figuren 1 und 2 werden die Profilelemente 6 des Systems zum Tragen der Deckenplatten 7 beispielsweise von den Profilelementen 3 des anderen Systems getragen, das das flexible Rohr 4 trägt, was deshalb bewerkstelligt werden kann, weil die Profilelemente 3 mit anderen profilierten Oeffnungen 8 (d.h. mit Oeffnungen. die sich von den Oeffnungen 5 unterscheiden, die für die Aufnahme des flexiblen Rohrs 4 dienen) versehen sind, in welche die Profilelemente 6 eingehängt werden. Andere Lösungen sind im Rahmen der vorliegenden Erfindung ohne weiteres möglich, worunter auch die zum Tragen der Deckenelemente 7 dienenden Profilelemente sind, die zum Tragen der Profilelemente dienen, an denen die Rohre 4 befestigt sind. Für die vorliegende Erfindung ist lediglich von Bedeutung, dass ein Netz zweier verschiedener Systeme von Profilelementen 3 und 6 vorgesehen sind, von denen das eine die Aufgabe hat, das flexible Heiz- bzw. Kühlrohr 4 zu tragen und das andere die Aufgabe hat, die Deckenplatten 7 mittels eines Systems von Klammer-Clips zu tragen. Die übrige Ausgestaltung ist bereits von untergeordneter Bedeutung und bezieht sich höchstens auf eine vorzugsweise gewählte Ausführungsform der vorliegenden Erfindung.

Zurück zu den die Deckenplatten 7 tragenden Profilelemente 6: die Figuren 1 und 2 zeigen, dass diese Profilelemente 6 in einer vorzugsweise gewählten Ausführungsform gemäss dem Patentanspruch zwei Zungen 9, 10 aufweisen, die elastisch gegeneinander vorgespannt sind und je mit einem längs verlaufenden Falz 11, 12 versehen sind, in dem eine Erhöhung 13, 14 (Figuren 1, 2 und 4) des Randes 15 der Deckenplatte 7 aufgenommen wird, wobei die beiden Zungen 9, 10 entsprechend der generellen Form des Profilelementes 6 so angeordnet sind, dass sie den Steg eines T-Profils bilden. Diese besondere Form des Profilelementes 6 weist zwei hauptsächliche Vorzüge auf, nämlich dass die Heiz- bzw. Kühldecke ohne jeden Zwischenraum zwischen den Dekkenplatten 7 bzw. zwischen den Riemen realisiert werden kann, da einerseits die Zungen 9, 10 nachgeben können, wenn der Rand der Deckenplatte 7 eingeschoben oder herausgenommen wird, in solcher Weise, dass zwei benachbarte Deckenplatten einander direkt berühren können, und da andererseits der ganze Rand 15 einer Deckenplatte 7 bzw. eines Riemens auf seiner ganzen Längenausdehnung gehalten werden kann und nicht bloss da und dort wie aus dem Stand der Technik bekannt, so dass der Rand absolut gerade gehalten wird und nicht nach unten durchhängen und "Wellen verursachen kann".

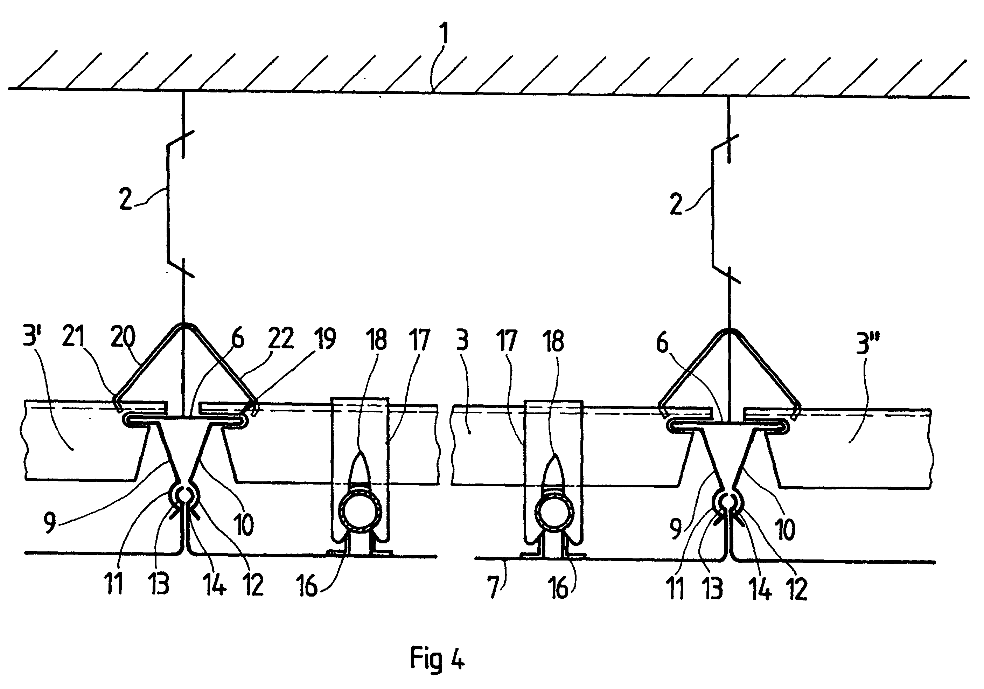

Aus den Figuren 2, und 4 ist sodann ersichtlich, dass das flexible Rohr 4 in wärmeleitendem Kontakt mit der Innenfläche der Deckenplatte 7 gehalten wird, in einer aus der Anwendungspraxis und beispielsweise aus der Deutschen Patentanmeldung DE-A-4020970, Fig. 2, bekannten Art und Weise, mittels wärmeübertragender Bleche 16 in der Form umgekehrter U-Profile, die das flexible Rohr 4 über einen Bereich von mindestens 180° umgeben. Solche Elemente sind nützlich für die Steigerung der thermischen Wirksamkeit der hier betrachteten Decke, haben jedoch keinerlei Bedeutung im Rahmen der vorliegenden Erfindung.

Die Vorzüge der vorliegenden, in allgemeiner Form hier in den Figuren 1 und 2 dargestellten Erfindung liegen darin, dass das Rohr 4 und die Deckenplatten 7 je auf verschiedenen Elementen befestigt werden können, d.h. auf den beiden Systeme von Profilelementen 3 und 6, ohne dass dabei während der Montage der Tragstruktur der erfindungsgemässen Decke gleichzeitig auf das eine oder das andere der Systeme Rücksicht genommen werden muss. Ein weiterer, sehr wichtiger Vorzug besteht darin, dass mindestens zwei einander gegenüberliegende Ränder 15 einer Deckenplatte 7 (bzw. eines Riemens) auf ihrer ganzen Längenausdehnung tragend gestützt werden, dank der zu den Rändern 15 zweier paralleler Deckenplatten 7 parallelen Anordnung der Profilelemente 6, statt zur quer zu diesen, wie es dem bisherigen Stand der Technik entspricht. Dies stellt sicher, dass absolut ebene Decken realisiert werden können, wie lange auch immer die Deckenplatten 7 oder die Riemen sind.

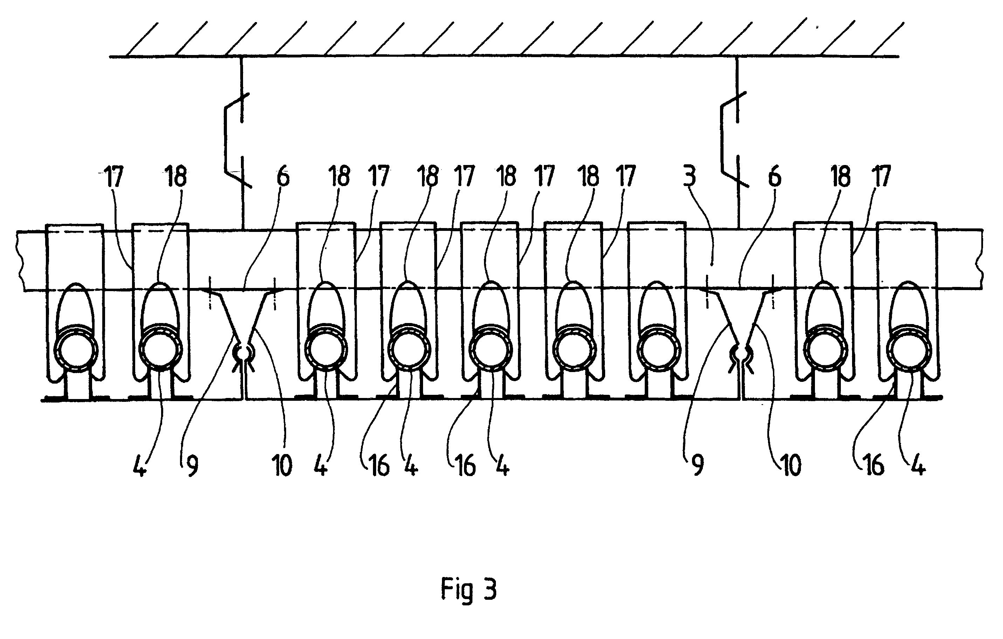

In den Figuren 1 und 2 wurde gezeigt, in welcher Weise die Profilelemente 6 mittels in den Profilelementen 3 angeordneten Oeffnungen 8 an ebendiesen Profilelementen 3 befestigt werden. Aus der Figur 3, die eine andere Ausführungsform der erfindungsgemässen Decke zeigt, und in der die gleichen Elemente bzw. die Elemente, die die gleichen Funktionen erfüllen, mit den gleichen Bezugsziffern bezeichnet sind, ist ersichtlich, dass die Profilelemente 6 auch mittels eines anderen Befestigungssystems an den Profilelementen 3, beispielsweise mittels Verschraubungen oder Vernietung, ohne Aenderung des generellen Konzeptes der Erfindung befestigt werden können. Neu in der Fig. 3 ist, dass das flexible Rohr 4 an den Profilelementen mittels geeigneter Reiter 17 in der Form eines nach unten offen U befestigt wird, deren zwei Flügel das Rohr 4 unter elastischer Verformung dieser Flügel festklemmen. In den Figuren 3 und 4 ist nur einer der zwei Flügel des Reiters 17 sichtbar, der den anderen Flügel verdeckt. Ferner ist ersichtlich, dass der Flügel einen Einschnitt 18 aufweist, der dem Flügel elastische Verformbarkeit verleiht, wobei der unterste, d.h. der am nächsten bei der Oeffnung legende Teil des Einschnittes 18 so ausgebildet ist, dass er das Rohr 4 längs eines Teils des Rohrumfangs umfassen kann. Dank diesen Reitern 17, die gemäss einer weiteren bevorzugt gewählten Ausführungsform aus Kunststoff gefertigt sind, erübrigt sich, dass geeignete Oeffnungen in den Profilelementen 3 ausgebildet werden müssen, die eine kostspielige Bearbeitung erfordern und die das Profilelement 3 schwächen, und überdies kann das flexible Rohr 4 auf irgendeiner bestimmten Höhe über den Deckenplatten 7 und in beliebiger seitlicher Lage dazu angeordnet werden, da die Reiter 17 auf dem Rohr 3 seitlich verschoben und am bestgeeigneten Ort angeordnet werden können. In der gezeigten Ausführungsform weisen die Reiter 17 aus Kunststoff den grossen Vorteil auf, dass eine Beschädigung des Rohrs 4 während der Montage, d.h. wenn es in seinen Aufhängeöffnungen mehr oder weniger stark verschoben wird, vermieden wird. Der Reiter aus Kunststoff kann in Anbetracht seiner Härteeigenschaften die Oberfläche des Rohrs 4 nicht zerkratzen oder das Rohr dabei beschädigen.

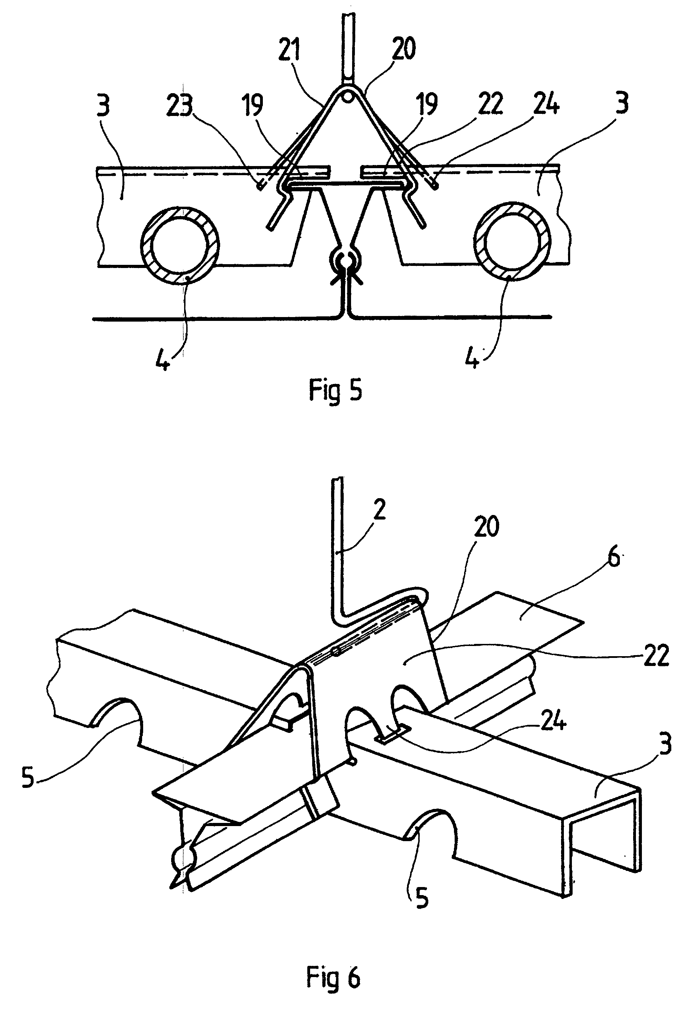

Die Erfindung wird besonders klar in den Figuren 4, 5 und 6 dargestellt, in denen die in den vorangehenden Figuren gleich gezeigten Elemente auch mit den gleichen Bezugsziffern bezeichnet sind. Gemäss diesen Darstellungen sind die Profilelemente des einen Systems (im gezeigten Beispiel die Profilelemente 6, die zum Tragen der Deckenplatten 7 dienen) als Profilelemente ausgebildet, die sich über weite Teile der Decke erstrecken, vorzugsweise über die ganze Raumbreite zwischen zwei Wänden. Diese Profilelemente 6 werden sodann mittels in der Höhe einstellbaren Tragstangen 2 am Gebäude-Deckenmauerwerk 1 in an sich bekannter und bereits vorgängig beschriebener Weise befestigt, während die Profilelemente 3 des anderen Systems von Profilelementen aus einzelnen Stücken 3, 3', 3" von Profilelementen bestehen, die im rechten Winkel zwischen zwei parallelen Profilelementen 6 des ersten Profilelemente-Systems angebracht und an diesen befestigt werden.

Diese Darstellung des erfinderischen Gedankens zeigt die Decke mit einem einzigen System durchgehender oder ununterbrochener Profilelemente, wobei das andere System aus einzelnen Stücken besteht, die rechtwinklig zwischen den durchgehenden Profilelementen des ersten Systems befestigt werden. Selbstverständlich können die durchgehenden Profilelemente sowohl die Elemente 3 sein, die das Rohr 4 tragen, oder wie in der Fig. 4 gezeigt und im Patentanspruch 2 als bevorzugte Ausführungsform beansprucht, die Profilelemente 6, die zum Tragen der Deckenplatten 7 dienen. Letztere Lösung hat sich als für die Montage sehr bequem erwiesen, da die Stücke der Profilelemente 3 an beliebiger Stelle zwischen zwei durchgehenden Profilelementen 6 befestigt werden können, wo es die Aufhängung des flexiblen Rohrs 4 erfordert.

Gemäss einer bevorzugten Ausführungsform der Heiz- bzw. Kühldecke, die in den Figuren 4, 5 und 6 dargestellt ist, ist vorgesehen, dass jedes Profilelement 3 des zweiten Systems von Profilelementen an einem Profilelement 6 des ersten Systems von Profilelementen mit Hilfe eines Einschnittes 19 befestigt ist, und dass der Einschnitt mittels eines Klemmorgans 20 zugeklemmt wird, dessen elastische Verformung die Befestigungskraft hervorruft. Beim Klemmorgan 20 handelt es sich um ein Clips-System, so dass die Montage der Heiz- bzw. Kühldecke praktisch ohne Werkzeuge erfolgen kann (abgesehen von den Schrauben, die zur Befestigung der Tragorgane 2 am Gebäude-Deckenmauerwerk 1 auf jeden Fall erforderlich sind).

In einer bevorzugten Variante dieser letztgenannten Ausführungsform der Erfindung ist das Klemmorgan 20 als umgekehrt V-förmiges Blech ausgebildet, dessen beide Flügel 21 und 22 unter elastischer Verformung eine Seite des durchgehenden Profilelementes 6 umfassen und Nocken 23, 24 aufweisen, die in geeignete Ausnehmungen eingreifen, die an den Enden der Profilelemente 3 des zweiten Systems von Profilelementen angebracht sind.

Diese Lösung bietet den Vorteil einfachster Montage der Tragstruktur der erfindungsgemässen Decke.

Zwei weitere Patentansprüche, nämlich die Ansprüche 8 und 9, betreffen sodann das Material, aus dem die Profilelemente 6, die die Deckenplatten 7 tragen und die V-förmigen Klemmorgane 20 vorzugsweise zu fertigen sind: da von diesen Elementen elastische Verformbarkeit gefordert wird, ist die Wahl eines Federstahls für die Herstellung zweckmässig.

Die vorliegende Erfindung wurde unter Bezugnahme auf einige bevorzugte Ausführungsbeispiele beschrieben, doch erschöpfen diese in keiner Weise alle denkbaren Ausführungsformen der Erfindung. Insbesondere kann sich die Form der Profilelemente 6, die die Deckenplatten 7 tragen, von der gezeigten Form unterscheiden, soweit nur das Prinzip eingehalten bleibt, dass diese Profilelemente dank ihrer lokalen elastischen Verformbarkeit die Deckenplatten 7 tragen, d.h. dank einer Klemmung in der Art von Klammer-Clips. Ebenso kann sich die Art der Befestigung des flexiblen Rohrs 4 am Profilelement 3 von den in der Beschreibung gezeigten Befestigungsarten im Rahmen der vorliegenden Erfindung durchaus unterscheiden.

## Patentansprüche

1. Konstruktion einer Heiz- und/oder Kühldecke mit einer Tragstruktur für ein flexibles Heiz- bzw. Kühlrohr (4) in Form einer aus einer Vielzahl von Windungen gebildeten Schlange, sowie für die Deckenplatten (7) in Form quadratischer Karos oder Riemen mit einem auf mindestens einer der parallelen Seiten aufgebogenen Rand, wobei die Tragstruktur zwei Systeme von parallelen Profilelementen (3, 6) enthält, und die Profilelemente (3 oder 6) des einen der Systeme im rechten Winkel zu jenen des anderen Systems von Profilelementen (6 oder 3) angeordnet sind, sodass ein Netz von tragenden Profilelementen gebildet wird, wobei die Profilelemente (6) des einen der Systeme von Profilelementen zur Befestigung der Deckenplatten (7) längs mindestens einer ihrer Seiten dienen, welche an den Profilelementen (6) mit Hilfe eines Andrucksystems, daß auf lokaler elastischer Verformung wie z.B. Klemm-Clips basiert, befestigt sind,
**dadurch gekennzeichnet, dass**
die Profilelemente des einen Systems von Profilelementen sich durchgehend über weite Bereiche der Decke erstrecken, vorzugsweise über die ganze Breite der Decke zwischen zwei Wänden, und dass
die Profilelemente des anderen Systems von Profilelementen dazu dienen, das flexible Heiz- bzw. Kühlrohr zu tragen,
und aus einzelnen Stücken bestehen, die im rechten Winkel zwischen zwei parallelen Profilelementen (3, 6) des ersten der Systeme von Profilelementen eingefügt und daran befestigt werden.

2. Konstruktion einer Heiz- und/oder Kühldecke gemäss dem Patentanspruch 1, **dadurch gekennzeichnet, dass**
die Profilelemente des Systems der durchgehenden Profilelemente jene (6) sind, die zum Tragen der Deckenplatten (7) dienen.

3. Konstruktion einer Heiz- und/oder Kühldecke gemäss dem Patentanspruch 1, **dadurch gekennzeichnet, dass**
die Profilelemente (6) des Systems von Profilelementen, die zum Tragen der Deckenplatten (7) dienen, zwei gegeneinander vorgespannte Zungen (9, 10) aufweisen, die je mit einem Falz (13, 14) versehen sind, in dem eine Erhebung (13, 14) des Randes (15) der Deckenplatte (7) aufgenommen wird, wobei die beiden Zungen (9, 10) den Steg eines T-Profils in der generellen Form des Profilelementes (6) bilden.

4. Konstruktione einer Heiz- und/oder Kühldecke gemäss dem Patentanspruch 1, **dadurch gekennzeichnet, dass**
das flexible Rohr (4) am Profilelement (3) des anderen Systems von Profilelementen mittels Reitern (17) in der Form eines nach unten gekehrten U befestigt ist, dessen beide Flügel das Rohr (4) unter elastischer Verformung der Flügel festklemmen.

5. Konstruktion einer Heiz- und/oder Kühldecke gemäss dem Patentanspruch 4, **dadurch gekennzeichnet, dass**
die Reiter (17) aus Kunststoff gefertigt sind.

6. Konstruktion einer Heiz- und/oder Kühldecke gemäss den Patentansprüchen 1 oder 2,
**dadurch gekennzeichnet, dass**
jedes der Profilelemente (3) des zweiten Systems von Profilelementen an einem Profilelement (6) des ersten Systems von Profilelementen mittels eines Einschnittes (19) befestigt ist, und dass der Einschnitt (19) mittels eines Klemmorgans (20) blockiert wird, dessen elastische Verformung die Befestigungskraft aufbringt.

7. Konstruktion einer Heiz- und/oder Kühldecke gemäss dem Patentanspruch 6, **dadurch gekennzeichnet, dass**
das Klemmorgan (20) als umgekehrte V-Form ausgebildet ist, deren beide Flügel (21, 22) unter elastischer Verformung die eine Seite des durchgehenden Profilelementes (6) umfassen und zwei Nocken (23, 24) aufweisen, die in entsprechende Ausnehmungen eingreifen, mit denen die Enden der Profilelemente (3) des zweiten Systems von Profilelementen versehen sind.

8. Konstruktion einer Heiz- und/oder Kühldecke gemäss dem Patentanspruch 3, **dadurch gekennzeichnet, dass**
die Profilelemente (6), die die Deckenplatten (7) tragen, aus Federstahl gefertigt sind.

9. Konstruktion einer Heiz- und/oder Kühldecke gemäss dem Patentanspruch 7, **dadurch gekennzeichnet, dass**
das V-förmige Klemmorgan (20) aus Federstahl gefertigt ist.

## Claims

1. Construction of a heating and/or cooling ceiling with a support structure for a flexible heating or cooling tube (4) in the form of a snake, and also for the ceiling panels (7) in the form of squares or strips with a margin bent up at at least one of the parallel sides, with the support structure containing two systems of parallel sectional elements (3, 6) and the sectional elements (3 or 6) of the one system being arranged at a right angle to those of the other system of sectional elements (6 or 3) so that a network of supporting sectional elements is formed, with the sectional elements (6) of the one of the systems of sectional elements serving for the securing of the ceiling panels (7) along at least one of their sides, which are secured to the sectional elements (6) with the aid of a
contact pressure system (9-14) which is based on local elastic deformation, such as for example clamping clips,
**characterised in that**
the sectional elements of the one system of sectional elements extend continuously over wide regions of the ceiling, preferably over the full width of the ceiling between two walls, and **in that** the sectional elements of the other system of sectional elements serve to carry the flexible heating and/or cooling tube and consist of individual pieces which are inserted at a right angle between two parallel sectional elements of the first of the systems of sectional elements and are secured thereto.

2. Construction of a heating and/or cooling ceiling in accordance with patent claim 1,
**characterised in that**
the sectional elements of the system of the continuous sectional elements are those (6) which serve to support the ceiling panels (7).

3. Construction of a heating and/or cooling ceiling in accordance with patent claim 1,
**characterised in that**
the sectional elements (6) of the system of sectional elements which serve for the support of the ceiling panels (7) have two tongues (9, 10) which are biased towards one another, which are each provided with a fold (13, 14) in which a raised portion (13, 14) of the margin (15) of the ceiling panel (7) is received, with the two tongues (9, 10) forming the web of a T-section in the general form of the sectional element (6).

4. Construction of a heating and/or cooling ceiling in accordance with patent claim 1,
**characterised in that**
the flexible tube (4) is secured to the sectional element (3) of the other system of sectional elements by means of riders (17) in the form of an inverted U, the two limbs of which fixedly clamp the tube (4) with elastic deformation of the limbs.

5. Construction of a heating and/or cooling ceiling in accordance with patent claim 4,
**characterised in that**
the riders (17) are made of plastic.

6. Construction of a heating and/or cooling ceiling in accordance with the patent claims 1 or 2,
**characterised in that**
each of the sectional elements (3) of the second system of sectional elements is secured to a sectional element (6) of the first system of sectional elements by means of a cut (19), and **in that** the cut (19) is blocked by means of a clamping member (20), the elastic deformation of which brings about the fastening force.

7. Construction of a heating and/or cooling ceiling in accordance with patent claim 6,
**characterised in that**
the clamping member (20) is formed in an inverse V-shape, the two limbs (21, 22) of which engage with elastic deformation around the one side of the continuous sectional element (6) and have two noses (23, 24) which engage into corresponding cut-outs with which the ends of the sectional elements (3) of the second system of sectional elements are provided.

8. Construction of a heating and/or cooling ceiling in accordance with patent claim 3,
**characterised in that**
the sectional elements (6) which carry the ceiling panels (7) are manufactured of spring steel.

9. Construction of a heating and/or cooling ceiling in accordance with patent claim 7,
**characterised in that**
the V-shaped clamping member (20) is manufactured of spring steel.

## Revendications

1. Construction d'un plafond pour chauffage et/ou de réfrigération comprenant une structure porteuse pour un tuyau (4) souple de chauffage ou de refroidissement sous la forme d'un serpentin formé d'une pluralité de spires ainsi que pour les dalles (7) de plafond sous la forme de carreaux carrés ou de bandes ayant un bord courbé sur au moins l'un des côtés parallèles, la structure porteuse comportant deux systèmes d'éléments (3, 6) parallèles profilés, et les éléments (3 ou 6) profilés de l'un des systèmes étant disposé à angle droit par rapport à ceux de l'autre système d'éléments (6 ou 3) profilés de manière à former un réseau d'éléments profilés porteurs, les éléments (6) profilés de l'un des systèmes d'éléments profilés servant à la fixation des dalles (7) de plafond le long d'au moins l'un de leur côté, lesquels sont fixés aux éléments (6) profilés à l'aide d'un système d'application d'une pression (9 à 14), qui repose sur une déformation élastique locale comme par exemple des agrafes de serrage,
**caractérisée en ce que**
les éléments profilés de l'un des systèmes d'élément profilés s'étendent de manière continue sur des régions larges du plafond de préférence sur toute la largeur du plafond entre deux murs, et **en ce que** les éléments profilés de l'autre système d'éléments profilés servent à porter le tube souple pour le chauffage ou pour la réfrigération en étant constitués de pièces individuelles, qui sont insérées à angle droit entre deux éléments parallèles profilés du premier des systèmes d'éléments profilés et qui y sont fixés.

2. Construction d'un plafond pour le chauffage et/ou la réfrigération suivant la revendication 1, **caractérisée en ce que**
les éléments profilés du système d'éléments profilés continus sont ceux (6) qui servent à porter les dalles (7) de plafond.

3. Construction d'un plafond pour le chauffage et/ou la réfrigération suivant la revendication 1, **caractérisée en ce que**
les éléments (6) profilés du système d'éléments profilés qui servent à porter les dalles (7) de plafond comprennent deux languettes (9, 10) opposées précontraintes qui sont munies respectivement d'une rainure (13, 14) dans laquelle est reçue une partie (13, 14) saillante du bord (15) de la dalle (7) de plafond, les deux languettes (9, 10) formant l'âme d'un profilé en T de la forme générale de l'élément (6) profilé.

4. Construction d'un plafond pour le chauffage et/ou la réfrigération suivant la revendication 1, **caractérisée en ce que**
le tube (4) souple est fixé sur l'élément (3) profilé de l'autre système d'éléments profilés au moyen de cavaliers (17) sous la forme d'un U tourné vers le bas et dont les deux branches enserrent le tube (4) avec déformation élastique des branches.

5. Construction d'un plafond pour le chauffage et/ou la réfrigération suivant la revendication 4, **caractérisée en ce que**
les cavaliers (17) sont en matière plastique.

6. Construction d'un plafond pour le chauffage et/ou la réfrigération suivant la revendication 1 ou 2, en ce que chacun des éléments (3) profilés du deuxième système d'éléments profilés est fixé sur un élément (6) profilé du premier système d'éléments profilés au moyen d'une entaille (19), et en ce que l'entaille (19) est bloquée au moyen d'un organe (20) de serrage, dont la déformation élastique donne la force de fixation.

7. Construction d'un plafond pour le chauffage et/ou la réfrigération suivant la revendication 6, **caractérisée en ce que**
l'organe (20) de serrage est constitué sous la forme d'un V inversé, dont les deux branches (21, 22) entourent avec déformation élastique, l'un des côtés de l'élément (6) profilé continu et comportent deux bossages (23, 24), qui pénètrent dans des évidements correspondants dont les extrémités des éléments (3) profilés du deuxième système d'éléments profilés sont munies.

8. Construction d'un plafond pour le chauffage et/ou la réfrigération, suivant la revendication 3, **caractérisée en ce que**
les éléments (6) profilés qui portent les dalles (7) de plafond sont en acier pour ressort.

9. Construction d'un plafond pour le chauffage et/ou la réfrigération, suivant la revendication 7, **caractérisée en ce que**
l'organe (20) de serrage en forme de V est en acier pour ressort.
